# EUROPÄISCHE PATENTSCHRIFT

(11) **EP 1 521 073 B1**
(45) Veröffentlichungstag und Bekanntmachung des Hinweises auf die Patenterteilung: **04.10.2006**
(21) Anmeldenummer: 04022602.9
(22) Anmeldetag: 22.09.2004
(51) Int. Cl.: G01L 5/28, F16D 65/12

(54) **Verfahren und Vorrichtung zum Prüfen von Carbon-Keramik-Bremsscheiben**
Method and device for testing carbon ceramic brake disks
Dispositif et procédé pour tester des disques de frein en céramique carboné

(30) Priorität: 02.10.2003 DE 10346498
(43) Veröffentlichungstag der Anmeldung: 06.04.2005
(73) Patentinhaber: AUDI AG, 85045 Ingolstadt (DE)
(72) Erfinder: Rosenlöcher, Jens, 86153 Augsburg (DE); Kienzle, Andreas, Dr., 86753 Möttingen OT Balgheim (DE); Wüllner, Andreas, 80992 München (DE)
(74) Vertreter: Deckers, Hellmuth Alexander

(56) Entgegenhaltungen:
- EP-A- 1 203 830
- EP-A- 1 298 342
- WO-A-01/28947

## Beschreibung

Die Erfindung betrifft ein Verfahren und eine Vorrichtung zum Prüfen von Carbon-Keramik-Bremsscheiben.

Die Belastbarkeit von Bremssystemen wird üblicherweise dadurch bestimmt, daß eine Bremsscheibe aus einer dem Betriebszustand bei einer festgelegten Fahrzeuggeschwindigkeit (90 % der Maximalgeschwindigkeit) entsprechenden Rotationsgeschwindigkeit und mit einem dem Gewicht des Fahrzeugs entsprechenden Trägheitsmoment zu einer niedrigeren Fahrzeug-Geschwindigkeit oder zum Stillstand abgebremst wird. Dabei wird der zum Abbremsen benötigte Druck für die Betätigung der Bremszange gemessen. Dieser Testzyklus wird vielfach nacheinander durchlaufen; durch die Erwärmung der Bremsscheibe steigt der benötigte Druck dabei an. Die Grenze für den Bremsdruck bei Kraftfahrzeugen, die durch die Hydraulik bestimmt wird, liegt bei ca. 180 bar. Als Maß für die Belastbarkeit wird die Anzahl von derartigen unmittelbar aufeinanderfolgenden Bremsvorgängen angegeben, bis zu der mit dem maximal verfügbaren Druck noch abgebremst werden kann.

Diese Art der Prüfung benötigt jedoch erhebliche Zeit. Weiter wird dabei stets die Belastbarkeit der Kombination mit einem Bremsbelag getestet, und nicht die Belastbarkeit der Scheibe alleine. Die Aussagen gelten daher immer nur für die Kombination von Bremsscheibe und Bremsbelag.

Die Schädigung einer Carbon-Keramik-Bremsscheibe kann durch Einwirken von höheren Temperaturen über einen verlängerten Zeitraum erfolgen. Eine derartige Beanspruchung kann im Betrieb bei Dauerbremsungen (beispielsweise bei einer Bergabfahrt) auftreten. In diesem Fall der thermischen Dauerbeanspruchung können bei unzureichenden Schutz der Verstärkungsfasern aus Kohlenstoff diese oxidativ geschädigt werden; dadurch vermindert sich die Torsionsfestigkeit, die Scheiben können bei niedrigerer Drehzahl als im Ausgangszustand zerbrechen. Ein Entwicklungsziel ist daher, die Empfindlichkeit bei thermischer Langzeitbeanspruchung zu verringern.

Über das Verhalten von Carbon-Keramik-Bremsscheiben bei derartigen Beanspruchungen können Belastungsprüfungen an einem Bremsenprüfstand nur unzureichende Auskunft geben, da wie erwähnt stets nur Kombinationen von Bremsscheibe und Belag getestet werden können.

Die Ermittlung der Berstdrehzahl einer Carbon-Keramik-Bremsscheibe ist aus der EP 1 298 342 A2 bekannt.

Es besteht daher die Aufgabe, ein Verfahren zum Prüfen der Carbon-Keramik-Bremsscheiben alleine zu finden, und eine dafür geeignete Vorrichtung zur Verfügung zu stellen.

Diese Aufgabe wird erfindungsgemäß durch die in den Ansprüchen 1-6 angegebenen Merkmale gelöst. Dabei wird eine Carbon-Keramik-Bremsscheibe in Rotation versetzt wird und durch induktive Erwärmung aufgeheizt wird.

Die Erfindung betrifft daher ein Verfahren zum Prüfen von Carbon-Keramik-Bremsscheiben, bei dem eine rotierende Carbon-Keramik-Bremsscheibe durch induktive Erwärmung auf eine Temperatur zwischen 200 °C und 1500 °C erhitzt wird. Dabei werden bevorzugt Temperaturen von mindestens 1000 °C, besonders bevorzugt mindestens 1200 °C, und insbesondere mindestens 1400 °C angewandt. Die Temperatur der Bremsscheibe wird bevorzugt während der thermischen Belastung mit einem Strahlungspyrometer gemessen und aufgezeichnet. Nach Ablauf der gewählten Belastungszeit wird die Bremsscheibe auf Raumtemperatur abgekühlt und an einem Prüfstand ihre Berstdrehzahl ermittelt. In Abhängigkeit von der Länge der thermischen Belastung beobachtet man das Versagen der Bremsscheibe bei niedrigeren Drehzahlen.

Eine bevorzugte Variante dieses Prüfverfahrens ist, bei Carbon-Keramik-Bremsscheiben mit Kühlkanälen gleichzeitig kalte Luft (Raumtemperatur oder eine niedrigere Temperatur) oder ein anderes Kühlmittel über den Innenkreis durch die Kühlkanäle zu leiten. Dadurch entsteht ein Temperaturgradient vom Innen- zum Außenumfang, die inneren Zonen der Carbon-Keramik-Bremsscheibe werden daher weniger thermisch beansprucht.

In bevorzugter Weise wird dabei jeweils eine Serie von mindestens drei Carbon-Keramik-Bremsscheibe in gleicher Ausführung bei derselben Temperatur während unterschiedlicher Zeiten belastet. Anschließend werden die Berstdrehzahlen ermittelt. Zur induktiven Aufheizung wird die Carbon-Keramik-Bremsscheibe auf einem frequenzgeregelten Drehteller befestigt, die kreisringförmige Bremsscheibe rotiert im Spalt eines Gabelinduktors, wobei der Spalt des Gabelinduktors das gesamte Reibflächensegment überdeckt. Im Fall einer Carbon-Keramik-Bremsscheibe mit Kühlkanälen wird gemäß der bevorzugten Ausführungsform ein Schlauch, durch den die Kühlluft an den Innenkreis in einem einstellbaren Volumenstrom zugeführt wird, mittels eines Keramikflansches an der Keramikbremsscheibe positioniert.

Dadurch wird die Bremsscheibe thermisch vorkonditioniert, um die folgenden Prüfzyklen auf dem Schwungmassenprüfstand verkürzen zu können und damit die Prüfkosten deutlich zu verringern.

Eine für das Verfahren gemäß der Erfindung geeignete Induktionserwärmungsanlage besteht aus einem transistorisierten Umrichter bevorzugt in Serienschwingkreistechnik, mit einer Generatorleistung von 50 kW bis 200 kW, einem Frequenzbereich von 50 kHz bis 500 kHz und hat einen Wirkungsgrad von ca. 93 %. Die zu prüfenden Carbon-Keramik-Bremsscheiben werden auf einem Drehteller aufgespannt, der über eine Hauptspindel mit Rotationsantrieb, Frequenzumrichter und Riemenantrieb in Rotation versetzt wird, wobei seine Drehzahl bevorzugt 1 min⁻¹ bis 100 min⁻¹ beträgt. Der Drehteller ist in einem gegenüber dem Antrieb, dem Generator des Gabelinduktors und der Meßeinrichtung hinreichend thermisch isolierten Gehäuse untergebracht, wobei die maximalen Prüftemperaturen bis zu 1500 °C, mindestens jedoch bis zu 1000 °C betragen. Die Luftzuführung von außerhalb des Gehäuses bis zur Werkstückaufnahme ist bevorzugt so ausgelegt, daß sie bis zu 1500 m³/h an den Innenkreis der Carbon-Keramik-Bremsscheibe fördern kann.

Die Lager und Werkstückaufnahmen für die zu prüfende Carbon-Keramik-Bremsscheibe wird bevorzugt aus Keramik ausgeführt, ebenso die Flanschverbindung zur Luftzufuhr aus Keramik. Bevorzugt wird zur Kühlung des Generators für den Gabelinduktor eine Wasserkühlung eingesetzt.

Mit der beschriebenen Vorrichtung wurden Carbon-Keramik-Bremsscheiben geprüft, die unterschiedlich vorbehandelte Verstärkungsfasern aus Kohlenstoff enthielten: Die Carbon-Keramik-Bremsscheiben der Serie A enthielten Fasern aus Kohlenstoff, die gemäß dem in der DE 197 10 105 beschriebenen Verfahren dreifach mit einem carbonisierbaren Bindemittel überzogen und danach carbonisiert wurden. Die Carbon-Keramik-Bremsscheiben der Vergleichsserie V enthielten ungeschützte Fasern aus Kohlenstoff. Die Zusammensetzung der Matrix und die mittlere Faserlänge war in beiden Serien gleich. Bei der Prüfung ergab sich, daß die Berstdrehzahl bei den Carbon-Keramik-Bremsscheiben der Vergleichsserie V bereits nach einer thermischen Beanspruchung von 15 Stunden auf 60 % des Ausgangswerts gefallen war, während die Berstdrehzahl bei der Serie A nach einer thermischen Beanspruchung von 30 Stunden noch 95 % des Ausgangswerts betrug.

Eine gleichartige Prüfung wurde mit Carbon-Keramik-Bremsscheibe der Serien A und V durchgeführt, wobei jedoch während der Heizphase ein Luftstrom von 1500 m³/h durch den Innenkreis der Carbon-Keramik-Bremsscheibe und die Kühlkanäle geblasen wurde. Hier wurde bei der Serie V nach einer Belastungszeit von 15 Stunden ein Abfall auf 80 % des Ausgangswerts der Berstdrehzahl festgestellt, während für die Serie A nach 30 Stunden noch 98 % des Ausgangswerts gefunden wurden.

Es ergab sich mithin, daß mit dem erfindungsgemäßen Verfahren und einer dafür geeigneten Vorrichtung bereits nach kurzer Zeit ein deutlicher Unterschied in unterschiedlich stabilen Verbundwerkstoffen festzustellen war.

## Patentansprüche

1. Verfahren zum Prüfen von Carbon-Keramik-Bremsscheiben, bei dem eine rotierende Carbon-Keramik-Bremsscheibe durch induktive Erwärmung auf eine Temperatur zwischen 200 °C und 1500 °C erhitzt wird und nach Ablauf einer gewählten Belastungszeit auf Raumtemperatur abgekühlt und an einem Prüfstand ihre Berstdrehzahl ermittelt wird.

2. Verfahren nach Anspruch 1, **dadurch gekennzeichnet, daß** Carbon-Keramik-Bremsscheiben mit Kühlkanälen eingesetzt werden, wobei gleichzeitig ein Kühlmittel durch die Kühlkanäle geleitet wird.

3. Verfahren nach Anspruch 2, **dadurch gekennzeichnet, daß** als Kühlmittel Luft verwendet wird.

4. Verfahren nach Anspruch 1, **dadurch gekennzeichnet, daß** jeweils eine Serie von mindestens drei Carbon-Keramik-Bremsscheiben gleicher Ausführung bei derselben Temperatur während unterschiedlichen Zeiten belastet wird und die Berstdrehzahlen im Vergleich zu einer unbelasteten Carbon-Keramik-Bremsscheibe derselben Serie ermittelt werden.

5. Vorrichtung zum Prüfen von Carbon-Keramik-Bremsscheiben bestehend aus einem Gabelinduktor mit Umrichter zum Erhitzen der Bremsscheiben, der mit einer Generatorleistung von 50 kW bis 200 kW und in einem Frequenzbereich von 50 kHz bis 500 kHz betrieben wird, einem Drehteller, der im Spalt des Gabelinduktors rotiert und auf dem die zu prüfende Bremsscheibe befestigt ist, und einem Prüfstand zur Ermittlung der Berstdrehzahl der Bremsscheiben nach ihrer Abkühlung auf Raumtemperatur.

6. Vorrichtung nach Anspruch 5, **dadurch gekennzeichnet, daß** für die Abkühlung eine zusätzliche Kühlmittelzuführung von außerhalb der Vorrichtung bis zur Werkstückaufnahme vorgesehen ist.

## Claims

1. A process for testing carbon-ceramic brake discs wherein a rotating carbon-ceramic brake disc is heated to a temperature between 200 °C and 1500 °C through inductive heating and cooled down to ambient temperature after the expiration of a selected load time interval, and is tested for its rotational frequency to burst on a torque stand.

2. The process of claim 1 wherein carbon-ceramic brake discs with cooling channels are used wherein a coolant is run through the cooling channels at the same time.

3. The process of claim 2 wherein air is used as a coolant.

4. The process of claim 1 wherein each time a batch of at least three carbon-ceramic brake discs of the same lot is loaded at the same temperature for different time periods and tested for their rotational frequency to burst in comparison to an unloaded carbon-ceramic brake disc of the same lot.

5. A device for testing carbon-ceramic brake discs comprising a fork inductor with an inverter for heating the brake discs, operated with a generator power of from 50 kW to 200 kW in a frequency range of from 50 kHz to 500 kHz, a turntable rotating in the gap of the fork inductor with the brake disc to be tested mounted to it and a torque stand for determining the rotational frequency to burst of the brake discs after cooling them to ambient temperature.

6. The device of claim 5 wherein for cooling an additional conduit for providing coolant from outside of the device up to the specimen holder is provided.

## Revendications

1. Procédé d'épreuve de disques de frein en carbone/céramique, dans lequel un disque de frein en carbone/céramique mis en rotation est porté, par chauffage par induction, à une température comprise entre 200°C et 1500°C, et est refroidi ensuite à la température ambiante après écoulement d'une durée sélectionnée de mise sous charge, et la vitesse de rotation d'éclatement du disque est déterminée sur un banc d'essai.

2. Procédé selon la revendication 1, **caractérisé en ce qu'**il utilise des disques de frein en carbone/céramique pourvus de canaux de refroidissement, un fluide de refroidissement étant en même temps acheminé dans les canaux de refroidissement.

3. Procédé selon la revendication 2, **caractérisé en ce que** le fluide de refroidissement utilisé est de l'air.

4. Procédé selon la revendication 1, **caractérisé en ce que** respectivement une série d'au moins trois disques de frein en carbone/céramique de configuration identique est mise sous charge à la même température, pendant des durées différentes, et que les vitesses de rotation d'éclatement sont déterminées en comparaison avec un disque de frein en carbone/céramique sans charge, provenant de la même série.

5. Dispositif d'épreuve de disques de frein en carbone/céramique, composé d'un étrier d'induction avec changeur, destiné à chauffer les disques de frein, en travaillant à une puissance de générateur de 50 kW à 200 kW et dans une plage de fréquence de 50 kHz à 500 kHz, d'un plateau tournant qui tourne dans l'entrefer de l'étrier d'induction, plateau sur lequel est fixé le disque de frein à éprouver, et d'un banc d'essai permettant de déterminer la vitesse de rotation d'éclatement des disques de frein après leur refroidissement à la température ambiante.

6. Dispositif selon la revendication 5, **caractérisé en ce que**, pour réaliser le refroidissement, une amenée supplémentaire de fluide de refroidissement, de l'extérieur du dispositif jusqu'au support de la pièce, est prévue.
